(19) **Europäisches Patentamt**

**European Patent Office**

**Office européen des brevets**

(11) **EP 0 977 346 A1**

(12) **DEMANDE DE BREVET EUROPEEN**

(43) Date de publication:
**02.02.2000 Bulletin 2000/05**

(51) Int. Cl.⁷: **H02M 3/335**

(21) Numéro de dépôt: **98870170.2**

(22) Date de dépôt: **31.07.1998**

(84) Etats contractants désignés:
**AT BE CH CY DE DK ES FI FR GB GR IE IT LI LU MC NL PT SE**
Etats d'extension désignés:
**AL LT LV MK RO SI**

(71) Demandeur: **C.E.+ T**
**4020 Wandre (BE)**

(72) Inventeurs:
• **Frebel, Fabrice**
**4830 Limbourg (BE)**
• **Bleus, Paul**
**4020 Liege (BE)**

(74) Mandataire:
**Van Malderen, Joelle et al**
**Office Van Malderen,**
**Boulevard de la Sauvenière, 85/043**
**4000 Liège (BE)**

(54) **Circuit de conversion DC/DC**

(57)   La présente invention se rapporte à un convertisseur DC/DC commandé par un signal rectangulaire comportant une entrée pour une source de tension continue ($V_{DC}$), un transformateur comportant un enroulement primaire (1) relié à la source de tension continue ($V_{DC}$) et un enroulement secondaire (2), un seul commutateur commandé (S) relié en série avec le primaire (1) et l'entrée de la source de tension continue ($V_{DC}$), une sortie comprenant le secondaire (2) du transformateur ainsi qu'au moins un enroulement tertiaire (3) situé à proximité des enroulements primaire (1) et secondaire (2) au niveau du noyau du transformateur en série avec une première diode (D1), caractérisé en ce que l'enroulement tertiaire (3) est disposé sur une branche parallèle à la branche comprenant l'enroulement primaire (1) et présente le même sens d'enroulement que l'enroulement primaire (1), et en ce que le convertisseur comprend en outre un condensateur (C) d'inversion magnétique permettant la remise à zéro du transformateur, placé entre la branche comprenant l'enroulement primaire (1) et le commutateur (S) et la branche comprenant l'enroulement tertiaire (3) et la première diode (D1), ainsi qu'une seconde diode (D2) présentant le sens bloquant vis-à-vis de la source de tension continue ($V_{DC}$), elle-même en série avec l'enroulement tertiaire (3).

Figure 1

## Description

### Objet de l'invention

La présente invention concerne un circuit de conversion DC/DC à transfert direct.

La présente invention concerne plus particulièrement un nouveau circuit de convertisseur à transfert direct dénommé "convertisseur forward".

### Etat de la technique

Dans le domaine des convertisseurs DC/DC, il est connu d'utiliser des convertisseurs pour transformer une tension unipolaire, de préférence continue, en une autre tension unipolaire, de préférence continue, tout en garantissant une isolation galvanique. Un type de convertisseur est appelé convertisseur "forward".

L'isolation galvanique consiste à isoler l'enroulement primaire de l'enroulement secondaire d'un transformateur, ci-après aussi appelé respectivement primaire et secondaire, et de permettre d'avoir une différence de potentiel aux bornes du secondaire différente de celle aux bornes du primaire.

Le rapport de transformation est la tension aux bornes du secondaire rapportée à la tension aux bornes du primaire.

Le convertisseur "forward" présente comme inconvénient d'accumuler de l'énergie de magnétisation au niveau du noyau du transformateur.

Il est connu dans l'état de la technique, de recourir à un enroulement supplémentaire placé au niveau du noyau du transformateur, appelé ci-après enroulement tertiaire ou plus simplement tertiaire, qui renvoie cette énergie de magnétisation à la source de tension dans le but d'extraire cette énergie de magnétisation.

Parmi les convertisseurs "forward", plusieurs types peuvent être distingués, notamment le forward à un seul commutateur, à deux commutateurs ou le forward parallèle.

En ce qui concerne la présente invention, le forward à un seul commutateur est à la base de l'invention.

Il a la propriété de pouvoir traiter des courants très importants, qui par l'action du commutateur de la position ouverte à la position fermée, permettent de réaliser la phase de non-conduction et la phase de conduction.

La phase de non-conduction sert à décharger l'énergie de magnétisation accumulée au niveau du noyau du transformateur alors que la phase de conduction sert à la conversion de la tension d'alimentation.

Cependant, pour assurer une démagnétisation complète après la phase de conduction, il est actuellement nécessaire que la phase de non-conduction soit suffisamment longue et qu'elle dure au moins 50% du cycle complet des phases de conduction et de non-conduction cumulées.

En terme technique, ce comportement est caractérisé par un Duty-cycle (temps de fermeture sur période totale) inférieur ou égal à 50%.

Deux problèmes principaux se présentent en pratique lors de l'utilisation du convertisseur forward à un commutateur.

Tout d'abord, un moindre rendement énergétique par le fait d'avoir un temps de conversion, c'est-à-dire de conduction du commutateur inférieur au temps de restauration ou de démagnétisation du transformateur, et, en outre, par le fait de ne pas récupérer l'énergie contenue dans l'inductance de fuite.

Ensuite, un surdimensionnement de la plupart des composants, et en particulier du commutateur et du transformateur, est nécessaire, car ils sont soumis à des variations de tension ou de courant brusques et de valeur très importante.

Le document EP-A-0474471 décrit un convertisseur de tension continue par commutation en signal rectangulaire sous tension nulle, comportant une entrée pour une source de tension continue, un transformateur comportant un primaire et relié à la première entrée, un commutateur principal relié en série avec le primaire et l'entrée de la source de tension continue ainsi qu'un générateur de signal d'horloge pour commander le commutateur principal. Ce convertisseur comprend un commutateur auxiliaire et un condensateur d'inversion magnétique reliés en série avec le primaire et avec l'entrée de la source de tension continue, lequel commutateur auxiliaire est commandé par le générateur de signal d'horloge en opposition de phase par rapport au commutateur principal et sert à remettre à zéro le transformateur. Il comporte en outre des moyens de retardement de la commutation.

### Buts de l'invention

La présente invention vise à obtenir une amélioration du circuit électronique du convertisseur forward classique à un seul commutateur, en évitant les inconvénients de l'état de la technique.

Un autre but de la présente invention est de proposer de mieux exploiter les composants électroniques qui constituent le corps du circuit électronique et de mieux distribuer l'énergie sur la totalité desdits composants.

En particulier, la présente invention vise à augmenter la densité de puissance tant par unité de volume et de poids que par unité de coût des divers composants.

Un autre but complémentaire de la présente invention vise à récupérer l'énergie provenant des inductances de fuite et de magnétisation du transformateur par une partie du circuit au cours des phases de fonctionnement du convertisseur.

Un autre but complémentaire de la présente invention vise à améliorer le comportement dynamique du convertisseur et à augmenter sa plage de manipulation.

## Principaux éléments caractéristiques de l'invention

La présente invention concerne un convertisseur DC/DC commandé par un signal rectangulaire, comportant une entrée pour une source de tension continue, un transformateur comportant un enroulement primaire relié à la source de tension continue et un enroulement secondaire relié à la charge, un seul commutateur en série avec l'enroulement primaire et l'entrée de la source de tension continue destiné à réaliser le signal rectangulaire, ainsi qu'un enroulement tertiaire situé à proximité des enroulements primaire et secondaire au niveau du noyau du transformateur.

De préférence, l'enroulement tertiaire est en série avec une diode sur une branche disposée en parallèle à la branche comprenant l'enroulement primaire et le commutateur.

Selon une première caractéristique de l'invention, l'enroulement tertiaire disposé au niveau du transformateur a le même sens d'enroulement que l'enroulement primaire.

L'enroulement tertiaire peut être faiblement couplé, éventuellement bobiné sur un noyau séparé.

Selon une seconde caractéristique de l'invention, le convertisseur comprend des composants électroniques permettant de constituer un premier circuit de circulation de courant pour évacuer au moins l'énergie contenue dans l'inductance de fuite et dans l'inductance de magnétisation du transformateur, et un deuxième circuit de circulation de courant pour renvoyer cette énergie accumulée sous forme d'une induction de magnétisation inversée au transformateur.

Dans ce but, un condensateur d'inversion magnétique permettant la remise à zéro du transformateur est prévu, de préférence placé entre la branche comprenant l'enroulement primaire et le commutateur et la banche comprenant l'enroulement tertiaire et la diode, de même qu'une seconde diode présentant le sens bloquant vis-à-vis de la source de tension continue en série avec l'enroulement tertiaire.

Le premier circuit de circulation de courant comprend donc l'enroulement primaire, le condensateur, la première diode destinée à former une boucle de circulation de courant au travers de laquelle circule un courant de l'enroulement primaire vers le condensateur permettant d'accumuler au moins l'énergie d'inductance de fuite et de magnétisation du transformateur.

Le deuxième circuit de circulation de courant comprend l'enroulement primaire, le condensateur, la deuxième diode et l'enroulement tertiaire pour former une boucle de circulation de courant avec la source de tension d'entrée du convertisseur au travers de laquelle circule un courant du condensateur vers l'enroulement primaire pour renvoyer l'énergie accumulée au niveau du condensateur vers le transformateur sous la forme d'une induction de magnétisation inversée.

Avantageusement, le convertisseur selon la présente invention présente ainsi un comportement dynamique et un comportement énergétique améliorés par le positionnement de l'enroulement tertiaire dans le même sens d'enroulement que le primaire et le secondaire du transformateur, et par l'adjonction de seulement deux composants supplémentaires qui sont un condensateur et une deuxième diode.

Le type de comportement du convertisseur est principalement déterminé par le choix de ces deux éléments et leur disposition dans le circuit pour conduire à la formation des deux circuits de circulation de courant préalablement mentionnés.

La réalisation d'un signal rectangulaire de la source de tension est obtenue en plaçant le commutateur de manière cyclique en une phase de conduction et en une phase de non-conduction. Cette commutation en signal rectangulaire peut notamment être effectuée à fréquence constante au moyen d'un circuit de régulation classique.

Dans le cas où le commutateur est un transistor, le circuit de régulation sert à donner un signal de commande de faible potentiel électrique afin de placer le transistor en phase passante ou en situation de conduction.

L'absence de ce signal de commande entraîne le blocage du transistor et, donc, la phase de non-conduction.

Lors du passage de la phase de conduction vers la phase de non-conduction du commutateur, le circuit du convertisseur absorbe d'abord l'énergie contenue au niveau du transformateur au moyen d'une boucle de circulation de courant comprenant l'enroulement primaire du transformateur, le condensateur et la première diode. Le sens de circulation dans cette boucle est déterminée par la première diode qui ne sera passante que pour un courant de circulation allant depuis l'enroulement primaire vers le condensateur.

Ainsi, l'énergie absorbée au niveau du transformateur est stockée au niveau du condensateur.

Ensuite, lorsque l'énergie de magnétisation est complètement évacuée du transformateur, le circuit du convertisseur renvoie l'énergie stockée au niveau du condensateur sous la forme d'une induction de magnétisation inverse au noyau du transformateur, ceci à l'aide d'un deuxième circuit de circulation de courant comprenant en série l'enroulement primaire, le condensateur, la deuxième diode et l'enroulement tertiaire. Ces éléments formant une boucle avec la source de tension d'entrée du convertisseur.

Le sens de circulation dans cette boucle est déterminée par la deuxième diode qui ne sera passante que pour un courant de circulation allant depuis l'enroulement tertiaire vers le condensateur et du condensateur vers l'enroulement primaire.

Ainsi, l'énergie stockée au niveau du condensateur est transférée via les enroulements primaire et tertiaire sous forme d'une induction de magnétisation inverse au noyau du transformateur.

On réalise ainsi que les inductances de magnétisation et de fuite ne conduisent pas à des pertes énergétiques supplémentaires en récupérant d'abord cette énergie dans le circuit du convertisseur et en renvoyant ensuite cette énergie au transformateur sous la forme d'une induction de magnétisation inversée.

Une caractéristique supplémentaire de la présente invention se rapporte au fait que le courant de magnétisation au travers du transformateur qui, par le fait d'être inversé lors du retour de l'énergie stockée dans le circuit au noyau du transformateur, prend une allure bipolaire presque symétrique par rapport à la valeur 0 de démagnétisation complète du noyau du transformateur.

En effet, le noyau du transformateur subit une induction de magnétisation positive et négative suivant une répartition équilibrée par rapport à la situation complètement démagnétisée.

Il en résulte une meilleure utilisation du noyau dont le volume peut être réduit de moitié et même plus, en comparaison avec les noyaux utilisés dans les convertisseurs forward classiques à un seul commutateur.

Un autre avantage particulier de la présente invention concerne la période de conduction du commutateur.

En effet, suite à une meilleure répartition et utilisation de l'énergie de magnétisation et de fuite du transformateur, celui-ci se démagnétise plus rapidement avec pour conséquence que le temps de démagnétisation du noyau ou de non-conduction du commutateur peut être inférieur au temps de conduction du commutateur. Ce phénomène est caractérisé par un Duty-cycle plus grand que 50%.

Il en résulte une meilleure exploitation du transformateur pour lequel le temps de conversion DC/DC du courant est plus élevé que le temps de démagnétisation.

Un autre avantage de la présente invention réside dans le fait d'une commutation douce du commutateur par le fait d'exclure des variations brusques de tension aux bornes du commutateur.

Tout particulièrement, lors du passage de la phase de conduction à la phase de non-conduction, le commutateur coupe la circulation du courant de la source de tension d'entrée vers l'enroulement primaire. Cependant, la circulation du courant au niveau du secondaire n'est pas annulée pour autant et l'enroulement secondaire continue a être parcouru par un courant qui, finalement, se reflète sur l'enroulement du primaire.

Pour empêcher que l'image de ce courant secondaire sur l'enroulement primaire ne vienne augmenter brusquement la tension aux bornes du commutateur, le circuit électronique du convertisseur selon la présente invention prévoit que la circulation de l'image du courant secondaire s'effectue au travers du condensateur dans le premier circuit de circulation.

Ainsi, la première diode et le condensateur réalisent un circuit d'aide à la commutation appelé aussi "snubber" non dissipatif, qui permet au commutateur de s'ouvrir à tension nulle et en commutation douce.

En outre, le fait de placer le condensateur en série avec l'enroulement primaire entraîne un amortissement d'éventuelles oscillations parasites, ce qui permet une réduction de la taille et de la complexité d'éventuels circuits de filtrage.

Un autre avantage du convertisseur selon la présente invention réside dans le fait que la tension maximale aux bornes du commutateur S reste constante. En effet, la tension maximale aux bornes du commutateur S est à la fois proportionnelle à la tension à l'entrée ($V_{DC}$) et au Duty-cycle (D). La contrainte maximale est donc proportionnelle au produit $V_{DC}$ x D, soit à la tension de sortie, souvent régulée et donc constante.

En considérant que le Duty-cycle D peut prendre une valeur supérieure à 50%, on obtient une large plage de valeurs. En particulier, la tension d'alimentation $V_{DC}$ à l'entrée du convertisseur peut aisément être choisie dans une plage allant du simple au double et qui, par exemple, se situe entre 40 et 80 volts et même plus, sans pour autant recourir à l'utilisation d'éléments de valeur ou de taille plus importants pour le noyau du transformateur et le commutateur.

Le Duty-cycle pourra donc être choisi dans une plage de 0 à 100%.

Enfin, le convertisseur selon la présente invention présente surtout un comportement dynamique souple, en particulier lors du passage d'une situation de fonctionnement stationnaire à une autre situation de fonctionnement stationnaire par simple variation du Duty-cycle ou de la tension d'entrée ou autre. Le convertisseur retrouve alors rapidement et sans emballement du système un régime stationnaire.

De manière générale, la combinaison de tous les avantages précités (tout en maintenant une commande très simple à seulement un commutateur) n'est certainement pas rencontrée dans les montages connus à ce jour.

En outre, si on réalise que selon l'état de la technique, des circuits d'aide à la commutation, de protection et de filtrage sont nécessaires au bon fonctionnement, le convertisseur selon la présente invention comporte dans l'ensemble moins de composants électroniques que ceux déjà connus.

Selon une forme d'exécution encore préférée, on prévoit une troisième diode en parallèle sur l'enroulement tertiaire et la deuxième diode du deuxième circuit de circulation.

De manière encore préférée, on prévoit un enroulement quaternaire disposé en série avec la troisième diode.

D'autres caractéristiques et avantages de l'invention apparaîtront à la lecture de la description illustrant une forme d'exécution préférée de l'invention.

## Brève description des figures

| | |
|---|---|
| La figure 1 | représente un schéma électronique du convertisseur DC/DC selon l'invention. |
| La figure 2 | représente un schéma synoptique illustrant le fonctionnement du convertisseur DC/DC selon l'invention pendant la phase de conduction du commutateur. |
| La figure 3 | représente un schéma synoptique illustrant le fonctionnement du convertisseur DC/DC selon l'invention pendant la phase de transfert du courant secondaire. |
| La figure 4 | représente un schéma synoptique illustrant le fonctionnement du convertisseur DC/DC selon l'invention pendant la phase de transfert de l'induction de fuite. |
| La figure 5 | représente un schéma synoptique illustrant le fonctionnement du convertisseur DC/DC selon l'invention pendant la phase de transfert de l'induction de magnétisation. |
| La figure 6 | représente un schéma synoptique illustrant le fonctionnement du convertisseur DC/DC selon l'invention pendant la phase de transfert de l'énergie stockée dans la capacité interne au commutateur S vers le transformateur. |
| La figure 7 | représente un schéma synoptique illustrant le fonctionnement du convertisseur DC/DC selon l'invention pendant la phase de transfert de l'énergie de magnétisation stockée au condensateur vers le transformateur. |
| La figure 8 | représente un schéma synoptique illustrant le fonctionnement du convertisseur DC/DC selon l'invention pendant la phase de restauration de la tension aux bornes du condensateur à l'état initial. |
| Les figures 9 à 15 | représentent les formes d'onde des tensions et courants pendant les phases 0 à 6 reprises respectivement dans les figures 2 à 8. |

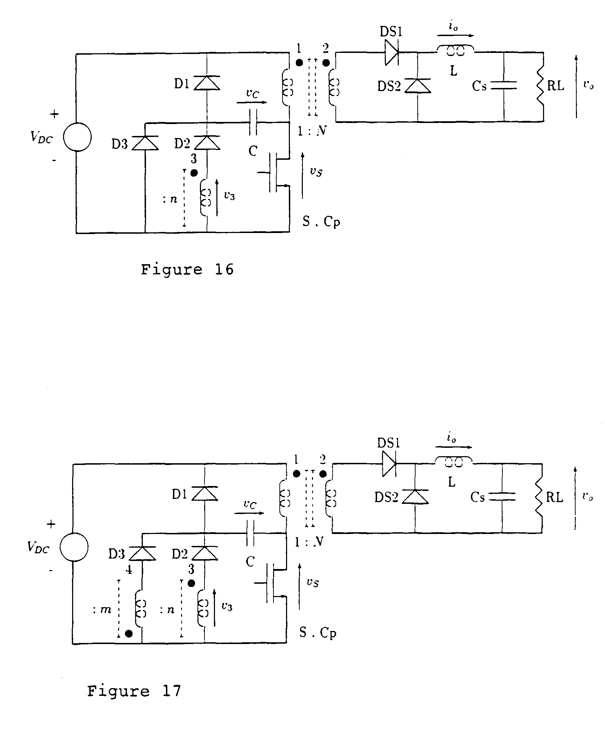

Les figures 16 et 17 représentent deux formes d'exécution encore préférées de la présente invention.

## Description détaillée de plusieurs formes d'exécution préférées de l'invention

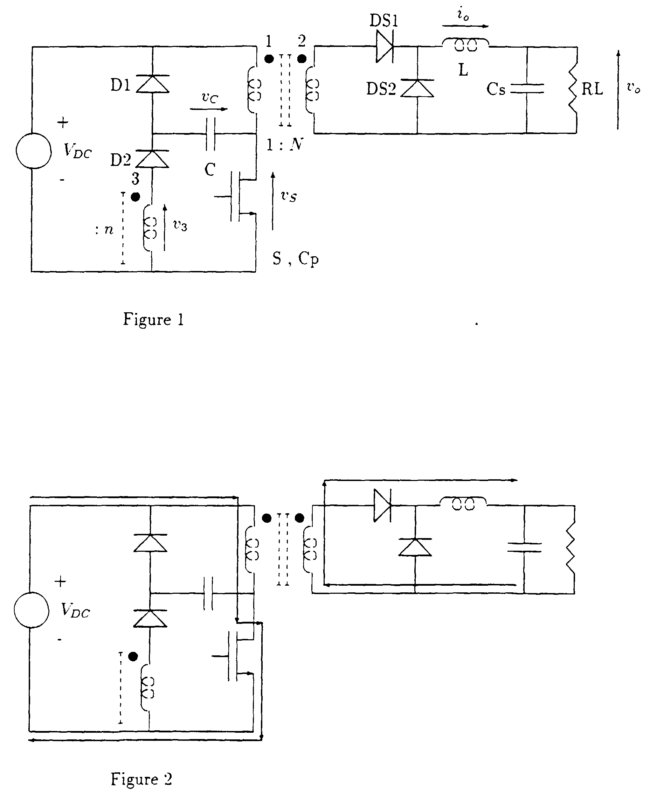

L'objet de l'invention sera d'abord décrit en prenant comme point de départ le schéma de la figure 1, qui représente le schéma électronique du convertisseur DC/DC selon la présente invention.

Le schéma électronique peut être subdivisé en deux circuits dont le circuit d'entrée comprenant l'enroulement primaire et tertiaire du transformateur et le circuit de sortie comprenant l'enroulement secondaire du transformateur.

Le circuit de sortie joue le rôle de filtre de sortie et comprend les composants électroniques suivants : une diode DS1, une bobine L, en série avec l'enroulement secondaire 2 et une diode DS2, un condensateur CS et une charge RL en parallèle avec l'enroulement secondaire. La diode DS2 et le condensateur étant disposés de part et d'autre de la bobine L.

Le circuit d'entrée sert de circuit de conduction, de démagnétisation et de restauration du convertisseur. Il comprend la source de tension continue symbolisée par $V_{DC}$ qui constitue la source d'énergie et d'alimentation du convertisseur. Aux bornes de la source de tension se trouve en série l'enroulement primaire 1 du transformateur avec le commutateur S. En outre, le circuit d'entrée peut être subdivisé en deux circuits de circulation de courant, notamment un premier circuit de circulation de courant et un deuxième circuit de circulation de courant.

Le premier circuit de circulation de courant est une boucle constituée par l'enroulement primaire 1, le condensateur C et la diode D1.

Le sens passant de la diode D1 seul permet une circulation du courant de l'enroulement primaire 1 vers le condensateur C.

Le deuxième circuit de circulation de courant comprend aux bornes de la source de tension $V_{DC}$ l'enroulement primaire 1 en série avec le condensateur C, la diode D2 et l'enroulement tertiaire 3. Le sens passant de la diode D2 seul permet une circulation du courant de l'enroulement tertiaire 3 vers le condensateur C et du condensateur C vers l'enroulement primaire 1 du transformateur.

En outre, les enroulements primaire 1, secondaire 2 et tertiaire 3 sont polarisés dans le même sens et le nombre de spires n3 de l'enroulement tertiaire 3 est au plus égal au nombre de spires n1 de l'enroulement primaire.

Préférentiellement le rapport à n3/n1 = 0,8 est utilisé pour assurer un bon fonctionnement du convertisseur selon l'invention.

Lors de la phase de conduction du commutateur S, c'est-à-dire en position fermée, l'énergie est soutirée à la source de tension $V_{DC}$ via l'enroulement primaire 1 et secondaire 2 du transformateur et est transmise directement au filtre de sortie.

Le chemin du courant emprunté dans le circuit d'entrée se fait depuis la source de tension $V_{DC}$ à l'enroulement primaire 1, puis via le commutateur S en position fermée vers la source de tension $V_{DC}$ pour fermer la boucle de circulation.

Dans le circuit de sortie, le courant passe dans le sens passant de la diode DS1 au travers de la bobine L pour alimenter une charge de sortie symbolisée par RL.

Lors de la phase de non-conduction du commutateur S, c'est-à-dire lorsque celui-ci est en position ouverte, la circulation de courant depuis la source de tension d'alimentation $V_{DC}$ vers l'enroulement primaire 1 est coupée. Cependant, au niveau du circuit de sortie, le courant continue à circuler au travers de la diode DS1 aussi longtemps que celle-ci est polarisée en direct. Ensuite, la circulation du courant est induite par la bobine L suivant la direction passante de la diode DS2.

Lors de la commutation de la phase de conduction vers la phase de non-conduction, plusieurs étapes peuvent être définies pour le circuit d'entrée du convertisseur.

Tout d'abord, on observe un premier courant de circulation au travers du primaire 1, du condensateur C et de la diode D1 pour évacuer de l'enroulement primaire 1, l'énergie provenant de l'image du courant secondaire circulant au travers de l'enroulement secondaire 2 du transformateur, de l'inductance de fuite et de l'inductance de magnétisation du transformateur. Cette énergie est stockée principalement au niveau du condensateur C.

Lorsque l'induction de magnétisation au niveau du transformateur est complètement absorbée, un deuxième courant de circulation s'établit dans le circuit d'entrée au travers de l'enroulement tertiaire 3, de la diode D2, du condensateur C et de l'enroulement primaire 1. La circulation du courant induite par le sens passant de la diode D2 du condensateur C vers l'enroulement primaire permet de renvoyer cette énergie stockée au niveau du condensateur au noyau du transformateur sous la forme d'une induction magnétique inversée.

La commutation à la position fermée du commutateur S induit une circulation de courant de l'enroulement tertiaire au travers des diodes D2 et D1 et permet de restaurer les conditions initiales de tension aux bornes du condensateur.

Dans la description qui précède, on a expliqué le comportement des différents composants électroniques du circuit du convertisseur ainsi que les chemins de circulation du courant qui sont caractéristiques au convertisseur selon la présente invention.

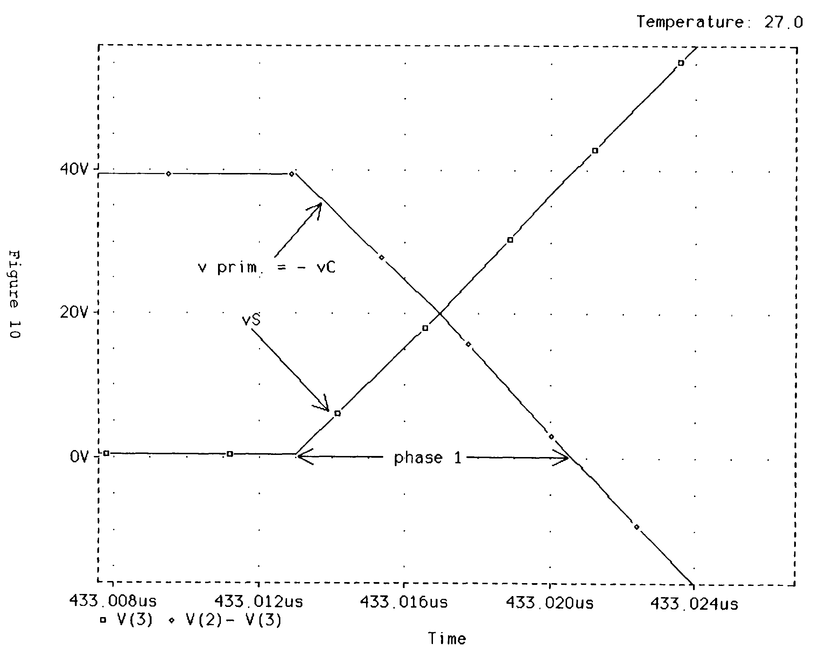

Les figures 2 à 8 représentent des schémas synoptiques du fonctionnement du convertisseur selon l'invention. Le fonctionnement du convertisseur selon l'invention peut être divisé en sept phases. Ces différentes phases sont désignées par les phases 0 à 6 et sont décrites aux figures 9 à 15.

La phase 0 constitue la phase de fonctionnement du convertisseur lorsque le commutateur est fermé, c'est-à-dire en état de conduction.

Les phases 1 à 6 constituent les phases de fonctionnement du convertisseur depuis la commutation de l'état de conduction à l'état de non-conduction du commutateur jusqu'à la commutation de l'état de non-conduction à l'état de conduction du commutateur.

*Phase 0 : Phase de transfert de l'énergie provenant de la source $V_{DC}$ vers la charge RL au travers du transformateur*

Comme illustré dans la figure 2, le transfert énergétique induit un accroissement du courant $i_O$ au travers de la bobine L. En outre, on constate également un accroissement linéaire du courant $i_M$ de magnétisation au niveau du noyau du transformateur.

En effet, lors de cette phase, l'inductance de magnétisation du transformateur emmagasine de l'énergie provenant de la source $V_{DC}$.

Les formes des courants $i_O$, $i_M$ et de tension $V_S$ sont représentées à la figure 9.

*Phase 1 : Phase de transfert du courant secondaire*

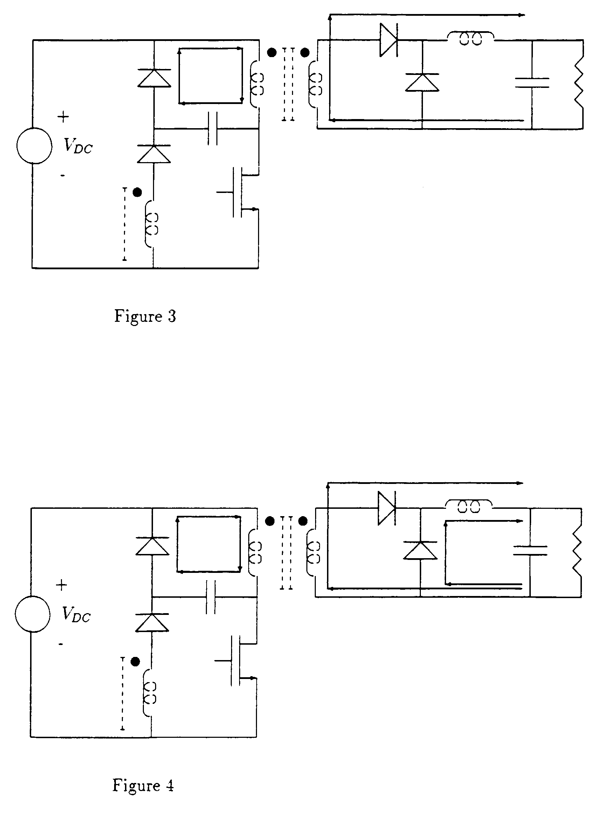

Au début de cette phase, le commutateur s'ouvre et passe de l'état de conduction à l'état de non-conduction. Comme illustré à la figure 3, l'image du courant secondaire se reflète sur l'enroulement primaire et charge le condensateur C en faisant augmenter la tension $V_C$ aux bornes de celui-ci. Le condensateur C ralentit la croissance de la tension $V_S$ aux bornes du commutateur S qui peut alors s'ouvrir en commutation douce.

Cette phase se termine lorsque la tension $V_1$, aux bornes du transformateur, c'est-à-dire de l'enroulement primaire s'annule.

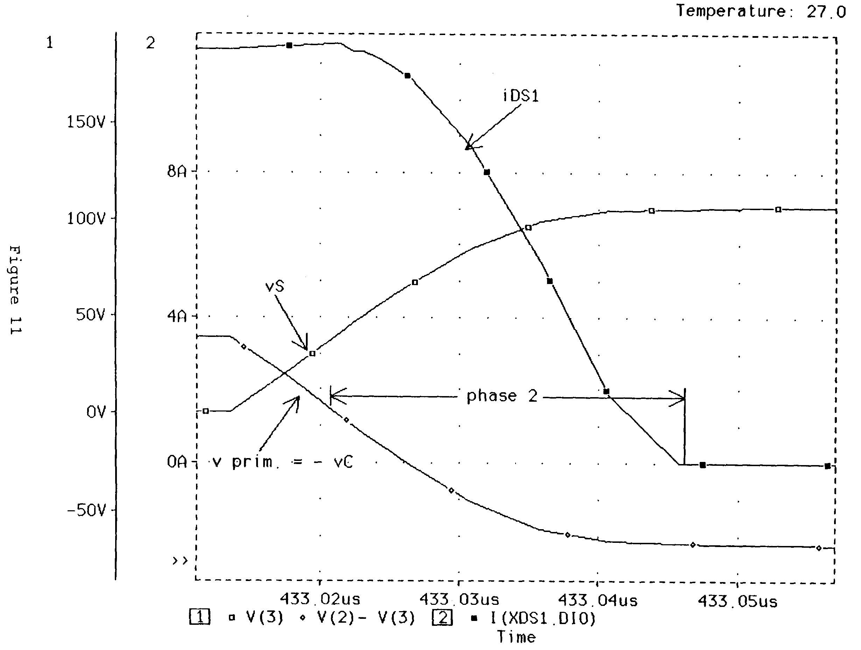

Les formes des tensions $V_S$, $V_C$ sont représentées à la figure 10.

*Phase 2 : Phase de transfert de l'induction de fuite*

Comme illustré à la figure 4, pendant cette phase, l'énergie contenue dans l'inductance de fuite du transformateur est transférée vers le condensateur C pour lequel la tension $V_C$ aux bornes, continue à croître.

Cette phase se termine lorsque le courant de circulation $i_{DS1}$ au travers de la diode DS1 s'annule.

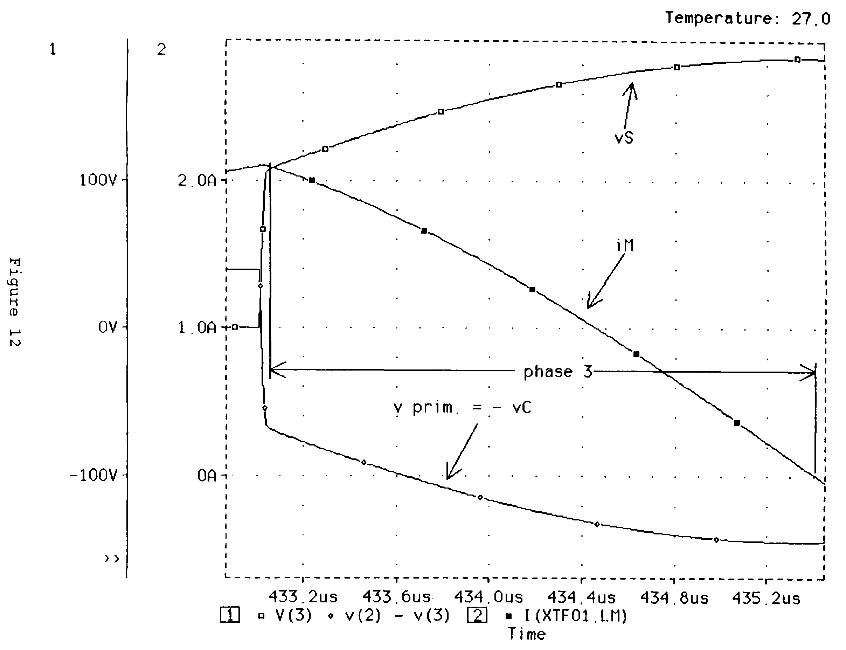

Les formes des tensions $V_S$ et $V_C$ et du courant $i_{DS1}$ sont représentées à la figure 11.

*Phase 3 : Phase de transfert de l'induction de magnétisation*

Comme illustré à la figure 5, pendant cette phase, l'énergie contenue dans l'inductance de magnétisation du transformateur est transférée vers le condensateur C pour lequel la tension $V_C$ aux bornes, continue à croître.

Cette phase se termine lorsque l'induction de magnétisation $i_M$ s'annule au niveau du noyau.

Par le fait même d'avoir évacué toute l'énergie à la fin de la phase 3 provenant de l'image du courant secondaire, de l'inductance de fuite et de magnétisation du noyau, les tensions aux bornes du condensateur $V_C$ et du commutateur $V_S$ atteignent une valeur maximale. En outre, il est a remarquer que lors de la phase 3, les courants $i_0$ et $i_{DS2}$ induits par la bobine L dans la direction passante de la diode DS1 décroissent avec le temps.

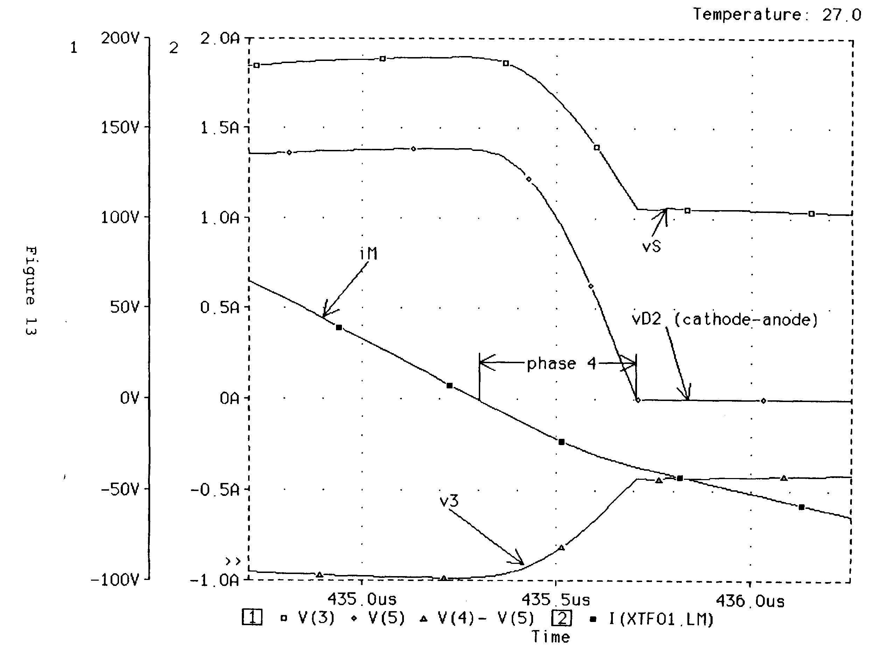

Les formes des tensions $V_s$ et $V_C$ ainsi que du courant $i_M$ sont représentées à la figure 12.

*Phase 4 : Transfert de l'énergie stockée dans la capacité interne au commutateur vers le transformateur*

Pendant cette phase très courte du fonctionnement du convertisseur, la capacité interne Cp au commutateur S entre en résonance avec l'inductance de magnétisation, ce qui induit un courant du condensateur interne Cp du commutateur vers l'enroulement primaire du transformateur.

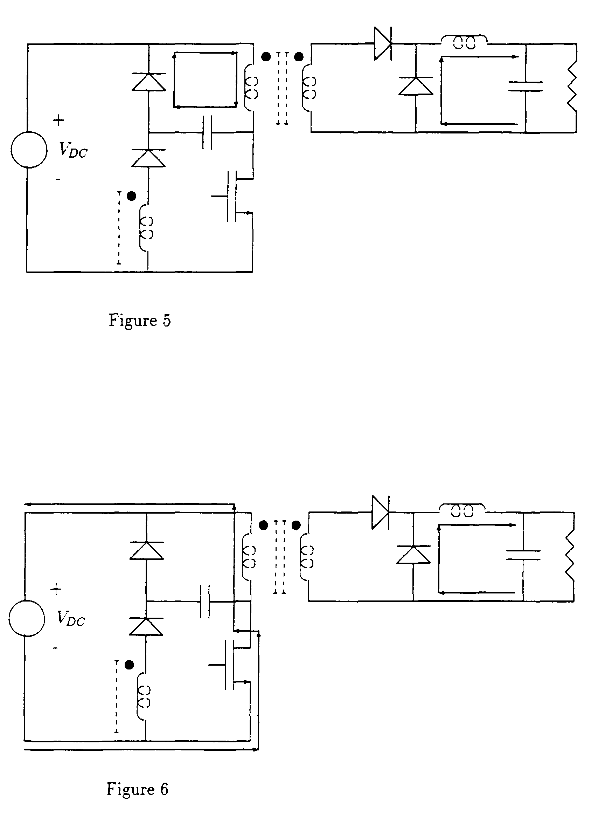

Comme illustré à la figure 6, il en résulte que l'induction de magnétisation $i_M$ au niveau du noyau du transformateur est inversée et devient négative et que la tension aux bornes du commutateur $V_S$ décroît rapidement.

En outre, la tension aux bornes de l'enroulement primaire se reflète sur l'enroulement tertiaire.

Cette phase se termine lorsque la différence de potentiel aux bornes de D2 est telle que celle-ci entre en phase de conduction, c'est-à-dire en situation passante.

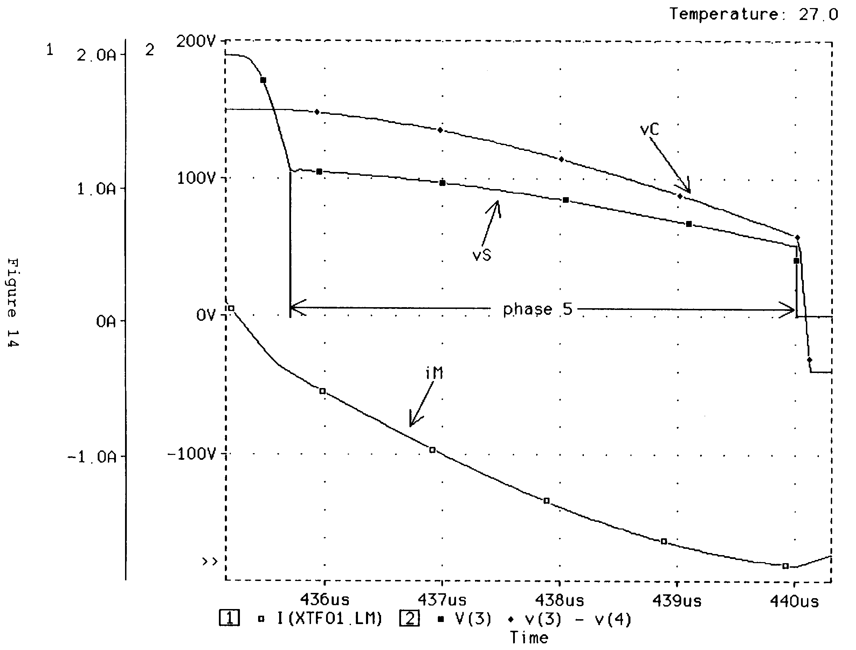

Les formes des tensions $V_S$, $V_3$ et $V_{D2}$ et de courant $i_M$ sont représentées à la figure 13.

*La phase 5 : Transfert de l'énergie de magnétisation stockée au condensateur C vers le transformateur*

Pendant cette phase, la diode D2 entre en conduction si bien que les deux enroulements primaires et tertiaires du transformateur se retrouvent en série avec le condensateur C.

Il s'opère alors un transfert d'énergie du condensateur C vers l'inductance de magnétisation du transformateur.

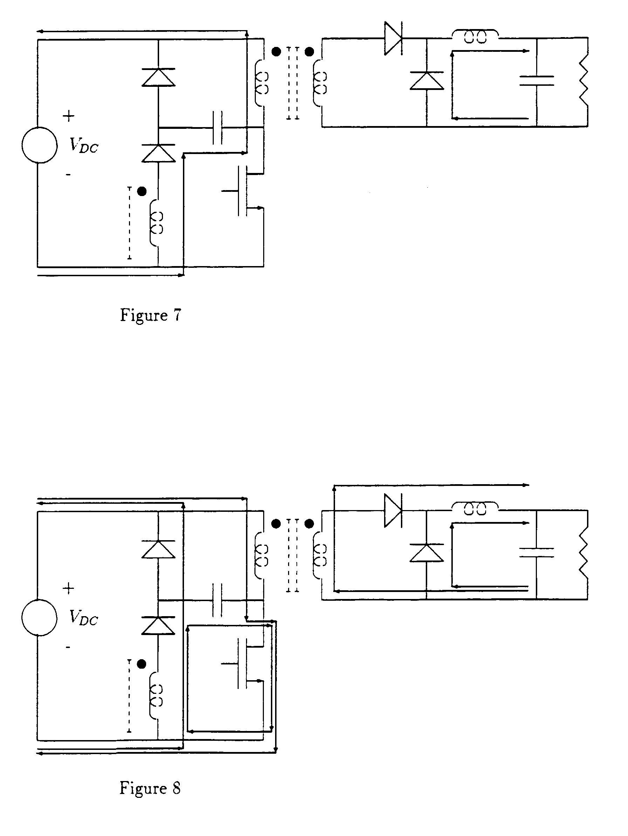

Comme illustré à la figure 7, cette étape se caractérise par l'état passant de la diode D2. Suite au passage du courant au travers du condensateur C, qui se décharge au travers du primaire, on observe une chute de tension $V_C$ aux bornes du condensateur C et une croissance de l'induction de magnétisation inversée $i_M$ au niveau du transformateur de plus en plus négative. Cette phase est également caractérisée par une chute de tension $V_S$ aux bornes du commutateur S et des enroulements primaire et tertiaire (cf. figure 7).

Cette phase se termine lorsque la tension $V_C$ aux bornes du condensateur est d'environ $V_{DC}$.

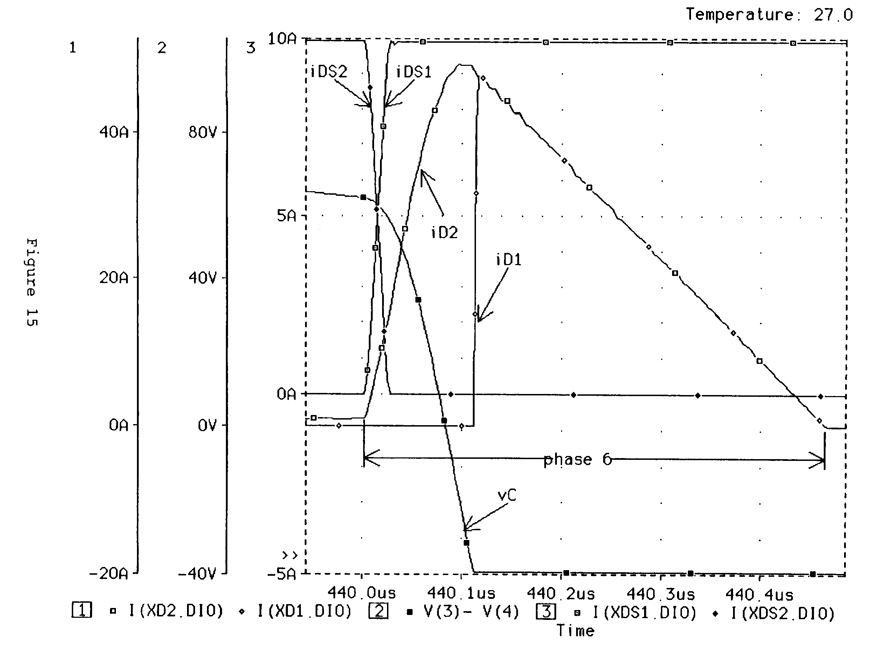

Les formes des tensions $V_C$ et $V_S$ et de courant $i_M$ sont représentées à la figure 14.

*Phase 6 : Restauration de la tension aux bornes du condensateur C*

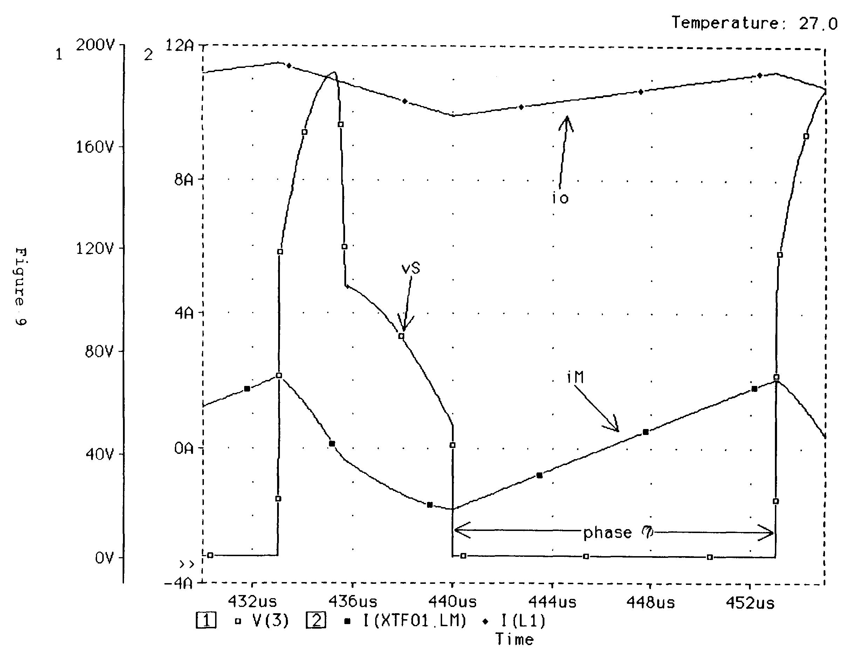

Cette phase permet de restaurer l'état initial du condensateur. Comme illustré à la figure 8, l'étape de restauration est caractérisée par le passage d'un courant important $i_{D2}$, $i_{D1}$ respectivement au travers des diodes D2 et D1, permettant ainsi une chute de tension $V_C$ de $V_{DC}$ à -$V_{DC}$.

Dans le circuit du filtre de sortie, cette phase est caractérisée par un courant $i_{DS1}$ dans la diode DS1 qui commence à croître. Lorsque que le courant $i_{DS1}$ atteint la valeur $i_0$ au travers de la bobine, le courant $i_{DS2}$ au travers de la diode DS2 se coupe (cf. figure 8).

Les formes de la tension $V_C$ et des courants $i_{DS1}$, $i_{DS2}$, $i_{D2}$, $i_{D1}$ sont représentées à la figure 15.

Les figures 16 et 17 représentent deux autres formes d'exécution du circuit de conversion DC/DC selon la présente invention, dans lesquelles on désire améliorer les caractéristiques du circuit en permettant d'obtenir un Duty-cycle encore supérieur à celui obtenu en utilisant le dispositif de la figure 1 sans toutefois augmenter les contraintes en tension sur l'interrupteur S.

Ainsi que représenté à la figure 16, on se propose de raccourcir la durée de la phase 5 en ajoutant une diode D3 dans le deuxième circuit de circulation en parallèle avec l'enroulement tertiaire 3 et la diode D2.

Selon une autre forme d'exécution encore préférée représentée à la figure 17, on ajoute un enroulement 4 supplémentaire au transformateur pour permettre à la phase 5 de commencer plus tôt et d'obtenir une évolution encore plus rapide de la tension aux bornes du condensateur C grâce à une impédance équivalente du transformateur encore inférieure. Dans ce cas, l'impédance équivalente de magnétisation du transformateur vue par le circuit devra être multipliée par $(1 - m)^2$ si m est le facteur de l'enroulement 4 supplémentaire du transformateur (par rapport à l'enroulement primaire).

Il faut toutefois remarquer que la diode D3 et l'enroulement 4 transportent un courant très faible, ce qui signifie qu'ils peuvent être de relativement faible taille par rapport aux autres éléments. Ceci réduit évidemment leur coût.

Au cours de la phase 5, le parcours du courant à travers la diode D2 et l'enroulement 3 est remplacé par un parcours à travers la diode D3 (voir figure 16) et éventuellement l'enroulement 4 (voir figure 17).

La tension maximale $V_S$ est limitée dans ce cas à $V_{Smax} = V_{DC} (1 + 1/m)$.

Dans la dernière forme d'exécution, on observe que l'enroulement 4 va servir de champ absolu à la tension appliquée à l'interrupteur S.

## Revendications

1. Convertisseur DC/DC commandé par un signal rectangulaire comportant une entrée pour une source de tension continue ($V_{DC}$), un transformateur comportant un enroulement primaire (1) relié à la source de tension continue ($V_{DC}$) et un enroulement secondaire (2) relié à la sortie du convertisseur, un seul commutateur commandé (S) relié en série avec l'enroulement primaire (1) et l'entrée de la source de tension continue ($V_{DC}$), ainsi qu'au moins un enroulement tertiaire (3) situé à proximité des enroulements primaire (1) et secondaire (2) au niveau du noyau du transformateur en série avec une première diode (D1), caractérisé en ce que l'enroulement tertiaire (3) présente le même sens d'enroulement que l'enroulement primaire (1), et en ce que le convertisseur comprend en outre un condensateur (C) d'inversion magnétique permettant la remise à zéro du transformateur, ainsi qu'une seconde diode (D2) présentant le sens bloquant vis-à-vis de la source de tension continue ($V_{DC}$), elle-même en série avec l'enroulement tertiaire (3).

2. Convertisseur DC/DC selon la revendication 1, caractérisé en ce que l'enroulement tertiaire et la première diode (D1) sont disposés sur une branche en parallèle sur l'enroulement primaire (1) et le commutateur (S).

3. Convertisseur selon la revendication 2, caractérisé en ce qu'un premier circuit (I) de circulation du courant est réalisé lorsque le commutateur (S) est fermé, comprenant l'enroulement primaire (1), un condensateur (C) et la première diode (D1) pour former une boucle de circulation de courant à travers laquelle circule un courant de l'enroulement primaire (1) vers le condensateur (C)permettant d'accumuler au moins l'énergie d'inductance de fuite et de magnétisation du transformateur.

4. Convertisseur selon la revendication 2, caractérisé en ce qu'un deuxième circuit (II) de circulation de courant est réalisé lorsque le commutateur (S) est ouvert, comprenant l'enroulement primaire (1), le condensateur (C), une deuxième diode (D2) et l'enroulement tertiaire (3) pour former une boucle de circulation de courant avec la source de tension d'entrée du convertisseur au travers de laquelle circule un courant du condensateur (C) vers l'enroulement primaire (1) pour renvoyer l'énergie accumulée au niveau du condensateur (C) vers le transformateur sous la forme d'une induction de magnétisation inversée.

5. Convertisseur selon la revendication 4, caractérisé en ce que lors de la commutation de la position fermée vers la position ouverte du commutateur, le premier circuit de circulation de courant ralentit la croissance de la tension aux bornes du commutateur en transférant l'image du courant circulant dans l'enroulement secondaire sur le condensateur (C).

6. Convertisseur selon la revendication 5, caractérisé en ce que le deuxième circuit de circulation de courant permet la restauration des conditions initiales par passage du courant de l'enroulement tertiaire vers le condensateur (C).

7. Convertisseur selon l'une quelconque des revendications précédentes, caractérisé en ce que la plage de variation du Duty-cycle varie de 0 à 100%.

8. Convertisseur selon l'une quelconque des revendications précédentes, caractérisé en ce que la tension maximale de fonctionnement appliquée au commutateur (S) dépend uniquement de la tension de sortie.

9. Convertisseur selon l'une quelconque des revendications précédentes, caractérisé en ce que la plage de tension appliquée à l'entrée du convertisseur varie aisément du simple au double de sa valeur.

10. Convertisseur selon l'une quelconque des revendications précédentes, caractérisé en ce que l'amplitude de la valeur maximale du courant de magnétisation du transformateur est égale dans les deux polarités.

11. Convertisseur selon l'une quelconque des revendications 2 à 9, caractérisé en ce que le passage du courant au travers du condensateur (C) entraîne une diminution de la variation de tension (par seconde) aux bornes du commutateur.

12. Convertisseur selon l'une quelconque des revendications précédentes, caractérisé en ce que le cycle de fonctionnement comprend au moins une phase pendant laquelle l'énergie est renvoyée sous la forme d'une induction de magnétisation inversée par remise à zéro du transformateur.

13. Convertisseur selon l'une quelconque des revendications précédentes, caractérisé en ce que le cycle complet de fonctionnement du convertisseur comprend les phases suivantes :

- phase de conduction du commutateur pendant laquelle l'énergie de la source ($V_{DC}$) est transférée via le transformateur à la charge (RL);

- phase de non-conduction du commutateur comprenant les 6 phases successives suivantes :

    1° phase de transfert du courant secondaire;

    2° phase de transfert de l'induction de fuite;

    3° phase de transfert de l'induction de magnétisation;

    4° phase de transfert de l'énergie stockée au condensateur ($C_p$) vers les transformateur;

    5° phase de transfert de l'énergie de magnétisation stockée au condensateur (C) vers le transformateur;

    6° phase de restauration de la tension aux bornes du condensateur (C).

**14.** Convertisseur selon l'une quelconque des revendications précédentes, caractérisé an ce qu'une troisième diode (D3) est prévue en parallèle sur la deuxième diode (D2) et l'enroulement tertiaire (3) du deuxième circuit de circulation (II).

**15.** Convertisseur selon la revendication 13, caractérisé en ce qu'un enroulement quaternaire (4) est disposé an série avec la troisième diode (D3).

Figure 1

Figure 2

Figure 3

Figure 4

Figure 5

Figure 6

Figure 7

Figure 8

Figure 9

Figure 10

Temperature: 27.0

EP 0 977 346 A1

v prim. = − vC

vS

phase 1

40V

20V

0V

433.008us    433.012us    433.016us    433.020us    433.024us

□ V(3)   ◇ V(2)− V(3)

Time

15

Figure 11

Figure 12

Figure 13

Figure 14

Figure 15

Figure 16

Figure 17

**EP 0 977 346 A1**

| Office européen des brevets | RAPPORT DE RECHERCHE EUROPEENNE | Numéro de la demande EP 98 87 0170 |
|---|---|---|

## DOCUMENTS CONSIDERES COMME PERTINENTS

| Categorie | Citation du document avec indication, en cas de besoin, des parties pertinentes | Revendication concernee | CLASSEMENT DE LA DEMANDE (Int.Cl.6) |
|---|---|---|---|
| X | VARGA L D ET AL: "A NOVEL LOSSLESS SNUBBER CIRCUIT" PROCEEDINGS OF THE ANNUAL APPLIED POWER ELECTRONICS CONFERENCE AND EXPOSITION. (APEC), BALTIMORE, MAR. 13 - 17, 1989, no. CONF. 4, 13 mars 1989, pages 40-45, XP000044248 INSTITUTE OF ELECTRICAL AND ELECTRONICS ENGINEERS * le document en entier * | 1 | H02M3/335 |
| A | DE 36 34 990 A (SCHRACK ELEKTRONIK AG) 4 juin 1987 * colonne 3, ligne 59 - colonne 68; figure 3 * | 1-15 | |
| A | US 4 268 898 A (BROWN HAROLD J) 19 mai 1981 * figure 2 * | 1 | |

| | DOMAINES TECHNIQUES RECHERCHES (Int.Cl.6) |
|---|---|
| | H02M |

Le présent rapport a été établi pour toutes les revendications

| Lieu de la recherche | Date d'achèvement de la recherche | Examinateur |
|---|---|---|
| LA HAYE | 23 novembre 1998 | Gentili, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

## ANNEXE AU RAPPORT DE RECHERCHE EUROPEENNE
## RELATIF A LA DEMANDE DE BREVET EUROPEEN NO.

EP 98 87 0170

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-11-1998

| Document brevet cité au rapport de recherche | Date de publication | Membre(s) de la famille de brevet(s) | | Date de publication |
|---|---|---|---|---|
| DE 3634990 A | 04-06-1987 | AT | 386096 B | 27-06-1988 |
| | | AT | 105587 A | 15-01-1988 |
| | | AT | 347585 A | 15-11-1987 |
| US 4268898 A | 19-05-1981 | CA | 1151728 A | 09-08-1983 |

Pour tout renseignement concernant cette annexe : voir Journal Officiel de l'Office européen des brevets. No.12/82